# DEMANDE DE BREVET EUROPEEN

(11) **EP 1 705 774 A2**
(43) Date de publication de la demande: **27.09.2006**
(21) Numéro de dépôt: 06300010.3
(22) Date de dépôt: 05.01.2006
(51) Int. Cl.: H02J 7/14

(54) **Méthode de pilotage d'un alternateur de véhicule automobile avec optimisation continue de la consommation de carburant**

(30) Priorité: 14.01.2005 FR 0500412
(71) Demandeur: Peugeot Citroen Automobiles SA, 78943 Vélizy-Villacoublay Cedex (FR)
(72) Inventeur: Clauzel, Jean-Philippe, 95280, Jouy Le Moutier (FR)
(74) Mandataire: Ménès, Catherine

(57) **Abrégé**

L'invention concerne une méthode de pilotage d'un alternateur (1) de véhicule automobile comprenant les étapes suivantes :
1/élaboration d'un indicateur de rendement moteur (RM), représentatif de la consommation de carburant nécessaire pour fournir une unité de couple moteur à l'alternateur (1),
2/élaboration d'un indicateur de besoin de charge (BC), représentatif du rendement carburant / état de charge, pour maintenir la charge électrique (Ch%) de la batterie (3) à un niveau compris dans une fourchette de valeurs prédéterminée,
3/élaboration d'un paramètre de commande (C) en fonction des indicateurs de rendement moteur (RM) et de besoin de charge (BC),
4/élaboration de la tension de consigne (Vcons) de l'alternateur en fonction du paramètre de commande (C),

les étapes 1/ à 4/ étant répétées avec une périodicité prédéterminée de façon à optimiser en permanence la consommation de carburant nécessaire pour maintenir la batterie (3) en charge.

## Description

L'invention concerne en général les méthodes de pilotage des alternateurs de véhicule automobile et des moyens pour leur mise en oeuvre.

L'invention concerne, selon un premier aspect, une méthode de pilotage d'un alternateur de véhicule automobile entraîné en rotation par le moteur du véhicule, ce véhicule comprenant en outre des consommateurs électriques et une batterie alimentés en courant électrique par l'alternateur.

On connaît des méthodes de pilotage de l'alternateur visant à réduire la consommation de carburant nécessaire pour maintenir la batterie en charge. L'énergie thermique émanant de la combustion du carburant est transformée en énergie mécanique par le moteur puis en énergie électrique par l'alternateur, cette énergie étant stockée sous forme chimique dans la batterie.

Chaque étape de ce processus entraîne des pertes, fonction du rendement du moteur, du rendement de l'alternateur et du rendement du courant de charge de la batterie. Ces trois rendements sont variables en fonction de la situation de vie du véhicule, de telle sorte que pour charger la batterie avec une énergie donnée, on peut consommer beaucoup plus de carburant que nécessaire si on ne tient pas compte du rendement global du processus au moment de la charge.

Les solutions connues consistent à détecter les phases d'accélération et de décélération du véhicule, et à exploiter les phases de décélération pour charger la batterie en profitant du couple gratuit fourni par l'inertie du véhicule, la charge de la batterie étant interrompue pendant les phases d'accélération, au cours desquelles la consommation induite par la charge de la batterie est trop élevée.

Les économies de carburant réalisées à l'aide de ces solutions sont limitées.

Dans ce contexte, la présente invention a pour but de proposer une solution qui permette de pousser plus loin les économies de carburant.

Une telle solution peut être, par exemple, une méthode de pilotage de l'alternateur fonctionnant selon un principe différent que les méthodes évoquées plus haut.

A cette fin, la méthode de l'invention comprend les étapes suivantes .
1/ élaboration d'un indicateur de rendement moteur, représentatif de la consommation de carburant nécessaire pour fournir une unité de couple moteur prélevée par l'alternateur,
2/ élaboration d'un indicateur de besoin de charge, représentatif du rendement carburant / état de charge, pour maintenir la charge électrique de la batterie à un niveau compris dans une fourchette de valeurs prédéterminée,
3/ élaboration d'un paramètre de commande en fonction des indicateurs de rendement moteur et de besoin de charge,
4/ élaboration de la tension de consigne de l'alternateur en fonction du paramètre de commande,
   les étapes 1/ à 4/ étant répétées avec une périodicité prédéterminée de façon à optimiser en permanence la consommation de carburant nécessaire pour maintenir la batterie en charge.

L'indicateur de besoin de charge est représentatif du carburant que l'on est prêt à consommer pour obtenir le courant de charge nécessaire pour charger la batterie. Ainsi, par exemple, l'indicateur de besoin de charge est 0 %, lorsque la batterie n'a plus besoin d'être chargée et lorsque l'on n'a besoin que d'un faible courant de maintien de la charge. On sollicitera le moteur alors uniquement quand on peut avoir le couple moteur gratuitement, c'est-à-dire sans consommation supplémentaire de carburant. Ceci est le cas, lorsque le rendement du moteur est 100 %.

L'indicateur de besoin de charge est 100 %, lorsque la batterie doit être chargée absolument, quelque soit le rendement du moteur.

En d'autres termes, plus le besoin de charge est important, moins on se préoccupe de la consommation de carburant pour recharger la batterie.

La méthode de l'invention peut aussi avantageusement présenter une ou plusieurs des caractéristiques suivantes.
- Les valeurs des indicateurs de rendement moteur et de besoin de charge peuvent être exprimées chacune sur une échelle de 0 à 100%, le paramètre de commande étant élaboré en additionnant les deux indicateurs, la tension de consigne étant choisie à l'étape 4/ de telle sorte que la batterie soit mise en charge si le paramètre de commande dépasse 100%, et de telle sorte que la batterie ne soit pas mise en charge si le paramètre de commande est inférieur à 100%.
- Le courant fourni à la batterie par l'alternateur peut être fonction au moins de la tension aux bornes de la batterie, celle-ci étant déterminée au moins par la tension de consigne de l'alternateur, la tension de consigne de l'alternateur étant choisie pour annuler le courant fourni à la batterie quand le paramètre de commande est inférieur à 100%.
- L'indicateur de besoin de charge peut être choisi égal à 0% quand la charge de la batterie est en haut de la fourchette, et égal à 100% quand la charge de la batterie est en bas de la fourchette.
- Quand la charge de la batterie est dans une zone intermédiaire de la fourchette, l'indicateur de besoin de charge peut être élaboré au moins en fonction de la température de la batterie, et peut décroître quand la température de la batterie croît. Il peut être élaboré en plus en fonction du rendement de l'alternateur et du rendement du courant de charge de la batterie.
- La méthode peut comprendre en outre une étape 3'/ d'élaboration d'un indicateur représentatif du courant électrique minimum à fournir en fonction de l'état des consommateurs électriques, la tension de consigne de l'alternateur étant choisie à l'étape 4/ de façon à ce que le courant fourni par celui-ci aux consommateurs électriques soit supérieur au courant minimum déterminé à l'étape 3'/.
- On peut détecter à l'étape 3'/ si un consommateur électrique sensible aux variations de la tension de consigne est actif, la tension de consigne de l'alternateur étant choisie à l'étape 4/ de façon à limiter les variations de tension dans le temps au cas où un consommateur sensible est actif.

Selon un second aspect, l'invention concerne un véhicule automobile pourvu d'un alternateur, d'une batterie et de moyens pour piloter l'alternateur selon la méthode décrite ci-dessus, lesdits moyens comprenant des moyens pour élaborer les indicateurs de rendement moteur et de besoin de charge, des moyens pour déterminer la charge, la tension et la température de la batterie, des moyens pour déterminer les rendements de l'alternateur et du courant de charge batterie, des moyens pour déterminer le courant minimum à fournir aux consommateurs électriques, des moyens pour détecter si un consommateur sensible est actif, et des moyens pour élaborer le paramètre de commande et la tension de consigne de l'alternateur .

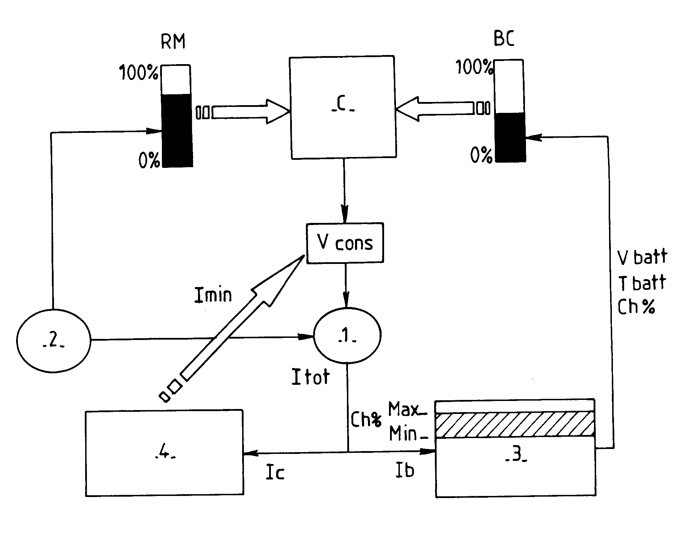

D'autres caractéristiques et avantages de l'invention ressortiront clairement de la description qui en est faite ci-dessous, à titre indicatif et nullement limitatif, en référence à la figure unique annexée représentant un algorithme simplifié de la méthode.

La méthode illustrée sur la figure vise à piloter un alternateur 1 de véhicule automobile entraîné en rotation par le moteur 2 du véhicule et produisant un courant électrique Itot. Ce véhicule comprend en outre un réseau de bord alimentant des consommateurs électriques 4, tels que des projecteurs, des moyens de chauffage, des moyens de climatisation, des actionneurs ou des calculateurs, et une batterie 5 stockant l'énergie électrique produite par l'alternateur sous forme chimique.

Le courant électrique Itot produit par l'alternateur se divise en un premier courant Ic alimentant le réseau de bord et un second courant Ib alimentant la batterie 5, de telle sorte que Ib + Ic = Itot.

Le second courant Ib sert à charger la batterie 3, et est principalement fonction de trois paramètres : la température Tbatt de la batterie 3, la tension électrique Vbatt aux bornes de la batterie 3, et la charge Ch% de la batterie 3.

La charge Ch% représente la quantité d'énergie stockée dans la batterie 3 et susceptible d'être transformée en courant électrique. Elle est exprimée sur une échelle variant de 0 à 100%, la valeur de 100% correspondant à la pleine charge de la batterie, c'est-à-dire à un état dans lequel il n'est plus possible d'augmenter la quantité d'énergie stockée dans la batterie, la valeur de 0% correspondant à la décharge complète de la batterie, c'est-à-dire à un état dans lequel la batterie ne peut plus fournir d'énergie électrique.

On notera que la charge de la batterie 3, c'est-à-dire la transformation du courant électrique Ib en énergie chimique stockée dans la batterie, s'effectue avec un rendement variable, appelée rendement du courant de charge, fonction principalement de la charge Ch% et de la température Tbatt de la batterie 3.

Les consommateurs électriques 4 du véhicule peuvent chacun sélectivement adopter au moins des états actif ou inactif, le consommateur 4 consommant une fraction du premier courant électrique Ic à l'état actif et ne consommant pas de courant à l'état inactif. Le premier courant Ic varie donc en fonction du nombre et de la nature des consommateurs électriques 4 actifs.

Certains consommateurs électriques 4 sont dits sensibles, par exemple les projecteurs ou les moyens de ventilation et de climatisation. Ces consommateurs sensibles ne doivent être soumis qu'à des variations de tensions très progressives, pour que les passagers ne puissent pas percevoir de modifications de l'intensité lumineuse des projecteurs ou du débit d'air de ventilation.

Le moteur 2 est typiquement un moteur thermique, qui consomme du carburant et produit un couple moteur, une partie de ce couple permettant d'entraîner les roues du véhicule et une autre partie du couple moteur étant prélevée pour entraîner l'alternateur 1.

La méthode de pilotage de l'invention comprend les étapes suivantes :
1/ élaboration d'un indicateur de rendement moteur RM, représentatif de la consommation de carburant nécessaire pour fournir une unité de couple moteur prélevée par l'alternateur 1,
2/ élaboration d'un indicateur de besoin de charge BC, représentatif du rendement carburant / état de charge, pour maintenir la charge électrique Ch% de la batterie 3 à un niveau compris dans une fourchette de valeurs prédéterminée,
3/ élaboration d'un paramètre de commande C en fonction des indicateurs de rendement moteur RM et de besoin de charge BC,
4/ élaboration de la tension de consigne Vcons de l'alternateur en fonction du paramètre de commande C.

Les étapes 1/ à 4/ sont répétées avec une périodicité prédéterminée de façon à optimiser en permanence la consommation de carburant nécessaire pour maintenir la batterie 3 en charge. Comme on le verra plus loin, cette optimisation est réalisée en prenant en compte les contraintes liées à l'alimentation du réseau de bord, et à la durée de vie de la batterie 3.

L'indicateur de rendement moteur RM est généralement fourni par le calculateur pilotant le moteur et peut être construit par exemple, mais pas nécessairement, à partir de la consommation de carburant spécifique (quantité de carburant consommée par unité de couple moteur fourni). La consommation spécifique du moteur varie en fonction de la situation de vie du véhicule. Elle est fonction du régime du moteur et du couple moteur demandé. Pour partie, la consommation spécifique augmente avec la charge. Mais, de manière générale, le moteur a un bien meilleur rendement à pleine charge qu'à charge partielle.

Pour cette raison, la présente invention prend en compte directement le rendement du moteur RM. En fonction de la charge, à un régime donné, le rendement peut varier beaucoup et peut donc donner un lestage ou un délestage de l'alternateur. Les dispositions de l'invention ne se limitent donc pas à une règle sélective telle que, par exemple, celle selon laquelle il faut délester l'alternateur systématiquement pendant les phases d'accélération du moteur.

L'indicateur de rendement moteur est exprimé sur une échelle de 0 à 100%, 0% correspondant aux situations où la consommation spécifique du moteur est élevée, 100% aux situations où la consommation spécifique est nulle (coupure d'injection ; couple fourni par l'inertie du véhicule).

On sait par ailleurs que pour maximiser la durée de vie de la batterie 3, il est préférable de maintenir celle-ci en permanence dans une fourchette de charge Ch% qui est à déterminer pour chaque batterie. Elle peut être comprise, par exemple, entre 70% et 90%. Plus la charge Ch% descend en dessous de la limite inférieure de la fourchette de charge prédéterminée, plus la durée de vie de la batterie est courte.

L'indicateur de besoin de charge BC est exprimé sur une échelle de 0 à 100%. Il est choisi égal à 0% quand la charge de la batterie est en haut de la fourchette (90% : besoin de charge faible ou nul), et égal à 100% quand la charge de la batterie est en bas de la fourchette (70% : besoin de charge impératif).

Quand la charge de la batterie Ch% est dans une zone intermédiaire de la fourchette, l'indicateur de besoin de charge BC est élaboré principalement en fonction de la température de la batterie Tbatt, et accessoirement en fonction du rendement de l'alternateur et du rendement du courant de charge de la batterie.

Il décroît quand la température de la batterie croît.

Le rendement de l'alternateur est principalement fonction du régime moteur et de la tension de consigne Vcons de l'alternateur. On a vu plus haut que le rendement du courant de charge est fonction principalement de la charge Ch% et de la température Tbatt de la batterie 3.

L'indicateur de besoin de charge BC est tabulé en fonction des différents paramètres mentionnés ci-dessus, ou lu sur des graphiques prédéterminés.

Le paramètre de commande C est élaboré en additionnant les indicateurs de rendement moteur RM et de besoin de charge BC, soit C = RM + BC.

La tension de consigne Vcons de l'alternateur 1 est choisie à l'étape 4/ de telle sorte que la batterie 3 soit mise en charge si le paramètre de commande C dépasse 100%, et de telle sorte que la batterie 3 ne soit pas mise en charge si le paramètre de commande C est inférieur à 100%.

Ainsi, si la charge Ch% de la batterie 3 est à la limite inférieure de la fourchette autorisée, BC = 100%, le paramètre de commande C est toujours supérieur ou égal à 100%, et on charge quelque soit le rendement moteur et donc quelque soit le coût du couple moteur prélevé par l'alternateur.

De même, si le rendement moteur est très favorable, RM = 100%, le paramètre de commande C est toujours supérieur à 100%, et on charge quelque soit le besoin de charge de la batterie Ch%.

Entre ces deux extrêmes, la décision de charger la batterie 3 sera fonction des valeurs respectives des deux indicateurs.

De préférence, une hystérésis permet d'éviter un fonctionnement haché de l'alternateur 1 quand le paramètre de commande est proche de 100%. Ainsi, on ne commande la mise en route de l'alternateur que quand le paramètre de commande C est égal ou dépasse 100%, car si l'indicateur de besoin de charge est 100 % et l'indicateur de rendement moteur est 0 %, il faut impérativement charger la batterie. Et on ne commande l'arrêt de l'alternateur que quand le paramètre de commande C est inférieur par exemple à 98%.

Comme on l'a dit précédemment, l'alternateur 1 est piloté par la tension de consigne. Ce mode de pilotage est particulièrement adapté dans le cas présent.

En effet, le second courant Ib fourni à la batterie 3 par l'alternateur 1 est fonction de la tension Vbatt aux bornes de la batterie 3, de la température Tbatt et de la charge de la batterie Ch%. La tension de la batterie Vbatt est déterminée au moins par la tension de consigne de l'alternateur Vcons, et diminue avec cette tension Vcons. Connaissant la charge Ch% et la température Tbatt de la batterie, il est possible de choisir la tension de consigne Vcons de l'alternateur 1 de façon à annuler le second courant Ib fourni à la batterie quand le paramètre de commande C est inférieur à 100%.

Selon un autre aspect de l'invention, les contraintes résultant de l'alimentation électrique du réseau de bord sont également prises en compte pour déterminer la tension de consigne de l'alternateur.

A cet effet, la méthode comprend une étape 3'/ d'élaboration d'un indicateur Imin représentatif du courant électrique minimum à fournir au réseau de bord en fonction de l'état des consommateurs électriques 4, c'est-à-dire en fonction du nombre et de la nature des consommateurs actifs. Le premier courant Ic doit rester supérieur à l'indicateur Imin pour que tous les consommateurs actifs soient alimentés normalement.

La tension de consigne Vcons de l'alternateur 1 est choisie à l'étape 4/ de façon à ce que le premier courant Ic fourni par celui-ci aux consommateurs électriques soit supérieur au courant minimum déterminé à l'étape 3'/ .

Par ailleurs, on détecte à l'étape 3'/ si un consommateur électrique 4 sensible aux variations de la tension de consigne Vcons est actif.

Si un consommateur sensible est actif, la tension de consigne Vcons de l'alternateur est choisie à l'étape 4/ de façon à limiter les variations de tension dans le temps. Ceci peut être effectué par exemple en imposant des limites supérieure et inférieure à la dérivée de la tension de consigne Vcons par rapport au temps.

Si aucun consommateur sensible n'est actif, la tension de consigne Vcons de l'alternateur est choisie librement à l'étape 4/, c'est-à-dire sans limitation des variations de tension de consigne Vcons.

Un véhicule automobile apte à mettre en oeuvre la méthode de pilotage décrite ci-dessus comprend les moyens suivants : des moyens pour élaborer les indicateurs de rendement moteur et de besoin de charge, des moyens pour déterminer la charge, la tension et la température de la batterie, des moyens pour déterminer les rendements de l'alternateur et du courant de charge batterie, des moyens pour déterminer le courant minimum à fournir aux consommateurs électriques, des moyens pour détecter si un consommateur sensible est actif, et des moyens pour élaborer le paramètre de commande et la tension de consigne de l'alternateur .

Ces moyens sont soit des capteurs, en particulier pour déterminer la charge, la température et la tension de la batterie ou l'activité des consommateurs électriques, soit des calculateurs ou des parties de calculateurs utilisant des valeurs fournies par les capteurs ou des valeurs disponibles à bord du véhicule, soit encore une combinaison de capteurs et de calculateurs.

On comprend bien que la méthode décrite ci-dessus présente des avantages significatifs.

Le problème consistant à minimiser la consommation de carburant nécessaire pour maintenir la batterie en charge est traité ici comme un problème d'optimisation sous contrainte. Le critère à optimiser est la consommation nécessaire au maintien de la charge de la batterie. Les contraintes d'optimisation sont la durée de vie de la batterie et l'alimentation du réseau de bord.

L'optimisation est effectuée en permanence, en analysant de façon continue les rendements du moteur thermique, de l'alternateur et du courant de charge. Dans l'art antérieur, l'optimisation n'était possible que dans certaines situations de vie du véhicule prédéfinies, déterminant différents modes de fonctionnement de l'alternateur.

On notera que la commande utilisée est particulièrement simple, ce qui accroît la robustesse de la méthode.

La méthode utilise essentiellement des paramètres disponibles à bord du véhicule ou fournis par des capteurs déjà existants. Elle est donc particulièrement économique.

En variante, il est possible de prévoir un capteur de courant mesurant en permanence le second courant Ib fourni à la batterie par l'alternateur, et d'utiliser les informations fournies par ce capteur pour déterminer la valeur de la tension de consigne Vcons à l'étape 4/ en fonction du paramètre de commande C . Ainsi, si le paramètre de commande C impose de ne pas charger la batterie 3, le capteur permet de déterminer quelle est la valeur de la tension de consigne Vcons conduisant à obtenir un second courant Ib nul .

## Revendications

1. Méthode de pilotage d'un alternateur (1) de véhicule automobile entraîné en rotation par le moteur (2) du véhicule, ce véhicule comprenant en outre des consommateurs électriques (4) et une batterie (3) alimentés en courant électrique par l'alternateur (1), la méthode comprenant les étapes suivantes :
1/ élaboration d'un indicateur de rendement moteur (RM), représentatif de la consommation de carburant nécessaire pour fournir une unité de couple moteur prélevée par l'alternateur (1),
2/ élaboration d'un indicateur de besoin de charge (BC), représentatif du rendement carburant / état de charge, pour maintenir la charge électrique (Ch%) de la batterie (3) à un niveau compris dans une fourchette de valeurs prédéterminée,
3/ élaboration d'un paramètre de commande (C) en fonction des indicateurs de rendement moteur (RM) et de besoin de charge (BC),
4/ élaboration de la tension de consigne (Vcons) de l'alternateur en fonction du paramètre de commande (C),
les étapes 1/ à 4/ étant répétées avec une périodicité prédéterminée de façon à optimiser en permanence la consommation de carburant nécessaire pour maintenir la batterie (3) en charge.

2. Méthode selon la revendication 1, **caractérisée en ce que** les valeurs des indicateurs de rendement moteur (RM) et de besoin de charge (BC) sont exprimées chacune sur une échelle de 0 à 100%, le paramètre de commande (C) étant élaboré en additionnant les deux indicateurs, la tension de consigne (Vcons) étant choisie à l'étape 4/ de telle sorte que la batterie (3) soit mise en charge si le paramètre de commande (C) dépasse 100%, et de telle sorte que la batterie (3) ne soit pas mise en charge si le paramètre de commande (C) est inférieur à 100%.

3. Méthode selon la revendication 2, **caractérisée en ce que** le courant fourni à la batterie (3) par l'alternateur (1) est fonction au moins de la tension aux bornes de la batterie (Vbatt), celle-ci étant déterminée au moins par la tension de consigne (Vcons) de l'alternateur (1), la tension de consigne (Vcons) de l'alternateur (1) étant choisie pour annuler le courant fourni à la batterie (3) quand le paramètre de commande (C) est inférieur à 100%.

4. Méthode selon l'une quelconque des revendications 2 à 3, **caractérisée en ce que** l'indicateur de besoin de charge (BC) est choisi égal à 0% quand la charge (Ch%) de la batterie (3) est en haut de la fourchette, et égal à 100% quand la charge (Ch%) de la batterie (3) est en bas de la fourchette.

5. Méthode selon l'une quelconque des revendications 1 à 4, **caractérisée en ce que**, quand la charge (Ch%) de la batterie (3) est dans une zone intermédiaire de la fourchette, l'indicateur de besoin de charge (BC) est élaboré au moins en fonction de la température (Tbatt) de la batterie, et décroît quand la température (Tbatt) de la batterie croît.

6. Méthode selon la revendication 5, **caractérisée en ce que**, quand la charge (Ch%) de la batterie (3) est dans une zone intermédiaire de la fourchette, l'indicateur de besoin de charge (BC) est élaboré également en fonction du rendement de l'alternateur (1) et du rendement du courant de charge de la batterie (3).

7. Méthode selon l'une quelconque des revendications 1 à 6, **caractérisée en ce qu'**elle comprend en outre une étape 3'/ d'élaboration d'un indicateur (Imin) représentatif du courant électrique minimum à fournir en fonction de l'état des consommateurs électriques (4), la tension de consigne (Vcons) de l'alternateur étant choisie à l'étape 4/ de façon à ce que le courant fourni par celui-ci aux consommateurs électriques (4) soit supérieur au courant minimum (Imin) déterminé à l'étape 3'/ .

8. Méthode selon la revendication 7, **caractérisée en ce qu'**on détecte à l'étape 3'/ si un consommateur électrique (4) sensible aux variations de la tension de consigne (Vcons) est actif, la tension de consigne (Vcons) de l'alternateur étant choisie à l'étape 4/ de façon à limiter les variations de tension dans le temps au cas où un consommateur sensible est actif.

9. Véhicule automobile pourvu d'un alternateur, d'une batterie et de moyens pour piloter l'alternateur (1) selon la méthode de la revendication 8, lesdits moyens comprenant des moyens pour élaborer les indicateurs de rendement moteur (RM) et de besoin de charge (BC), des moyens pour déterminer la charge (Ch%), la tension (Vbatt) et la température (Tbatt) de la batterie (3), des moyens pour déterminer les rendements de l'alternateur et du courant de charge batterie, des moyens pour déterminer le courant minimum (Imin) à fournir aux consommateurs électriques (4), des moyens pour détecter si un consommateur sensible est actif, et des moyens pour élaborer le paramètre de commande (C) et la tension de consigne (Vcons) de l'alternateur (1).
